# EUROPEAN PATENT SPECIFICATION

(11) **EP 1 304 520 B1**
(45) Date of publication and mention of the grant of the patent: **02.08.2006**
(21) Application number: 01308912.3
(22) Date of filing: 19.10.2001
(51) Int. Cl.: F16L 15/00, F16L 41/02

(54) **Pipe fittings**
Rohranschlüsse
Raccords de tuyauterie

(43) Date of publication of application: 23.04.2003
(73) Proprietor: The Hong Kong and China Gas Company Limited, North Point, Hong Kong (CN)
(72) Inventor: Chan, Alfred Wing Kin, North Point, Hong Kong (CN)
(74) Representative: Godwin, Edgar James

(56) References cited:
- DE-U- 8 913 648
- US-A- 1 115 912
- US-A- 2 062 145
- US-A- 2 239 942

## Description

The present invention relates to pipe fittings for use in building pipe lines for delivering, particularly but not exclusively, cooking and heating gas.

### BACKGROUND OF THE INVENTION

Pipe fittings are in abundant use for building pipe lines to deliver fluid from one location to another. They are available in a vast variety of forms and sizes for joining pipes together in different layouts. A typical low-cost material used for producing pipe fittings and pipes is iron, and the final products are usually galvanised with a coating of zinc or like for protecting the base material against rusting.

Pipes are cut with screw threads for joining purposes, whereby the base material at the joining positions is inevitably exposed. The base material adjacent to the joints upon completion may remain exposed, which would require protection. At present, paint is normally used for that purpose but is found to be unreliable.

The invention seeks to mitigate or at least alleviate such a problem by providing an improved pipe fitting.

### SUMMARY OF THE INVENTION

US-A-2 062 145 discloses a pipe fitting in accordance with the preamble of claim 1.

According to the present invention, there is provided a pipe fitting as set forth in claim 1.

In a preferred embodiment, the screw threads are slightly tapered outwards at a small angle with respect to the axis of the end.

It is preferred that for the pipe fitting to be made of a galvanised iron material.

The pipe fitting may be in the form selected from the group of an elbow joint, a T-shaped joint, a straight joint and an end cap.

### BRIEF DESCRIPTION OF DRAWINGS

The invention will now be more particularly described, by way of example only, with reference to the accompanying drawings, in which:
Figure 1 is a partial cross-sectional side view of a first embodiment of a pipe fitting in accordance with the invention, which is joined to a pipe as shown;
Figure 2 is a partial cross-sectional side view of a second embodiment of a pipe fitting in accordance with the invention;
Figure 3 is a partial cross-sectional side view of a third embodiment of a pipe fitting in accordance with the invention; and
Figure 4 is a cross-sectional side view of a fourth embodiment of a pipe fitting in accordance with the invention.

### DETAILED DESCRIPTION OF PREFERRED EMBODIMENTS

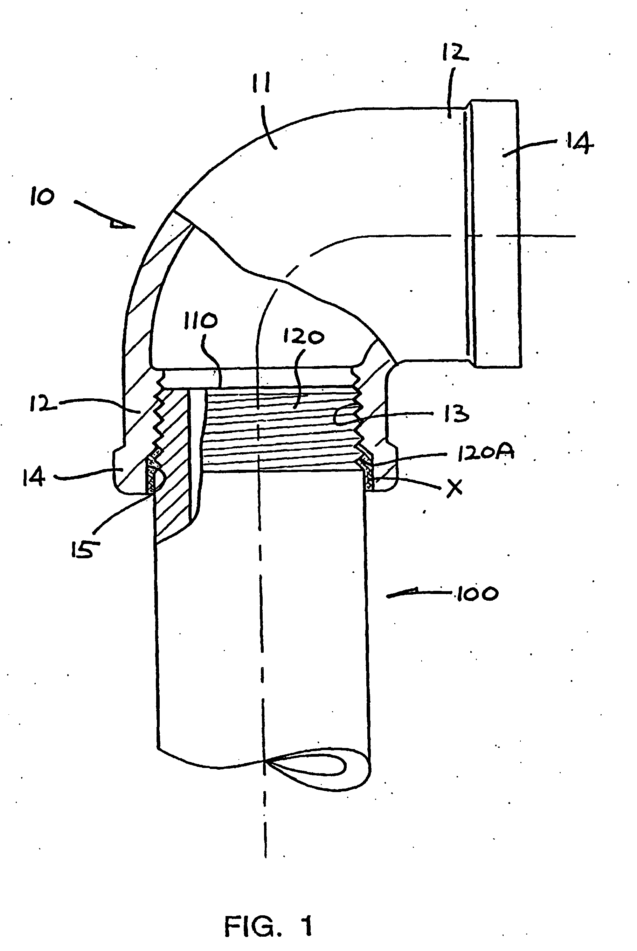

Referring initially to Figure 1 of the drawings, there is shown a first pipe fitting embodying the invention, which is in the form of a 90° elbow joint 10 shown in connection to a straight pipe 100. The pipe 100 includes one end 110 that is cut with external screw threads 120 for connection.

The elbow joint 10 has an arcuate hollow body 11 and two cylindrical open ends 12. Each end 12 is pre-formed with internal screw threads 13 and includes an integral extension collar 14 having, along the whole of its axial lenght, an inner diameter relatively larger than the major diameter of the screw threads 13, thereby defining an annular recess 15. The wall of the collar 14 has a comparable or substantially the same thickness, for strength, as that of the end 12 behind it. The outer diameter of the collar 14 is also relatively larger than that of the body of the end 12.

The joint 10 and the pipe 100 are connected together through inter-engagement between their threads 13 and 120. In order to achieve a connection that is as tight as possible, the threads 13 and 120 are slightly tapered outwards and inwards respectively, at a small angle of about 1° to 5° with respect to the central axes of the joint end 12 and pipe end 110, such that the pipe end 110 may be tightened into the joint end 12 through a wedge action. Accordingly, not all of the threads 120 will in practice engage with the threads 13, thereby leaving one or two turns, for example, of trailing threads 120A being unused and hence exposed. This will particularly be the case when the threads 120 are cut in situ, as there is a tendency or practice to cut the threads 120 slightly longer than the threads 13, by one or two turns for example.

The collar 14 is made sufficiently long to cover by surrounding the otherwise exposed trailing threads 120A of the pipe 100. Owing to the presence of the annular recess 15 in the collar 14, an annular gap is formed between the inner surface of the collar 14 and the outer surface of the pipe end 110, including the unused trailing threads 120A, which is completely filled with a sealing compound X.

The sealing compound X can easily be applied into the gap between the pipe 100 and the collar 14, where it is held stably in the recess 15. Apart from sealing the joint, the compound X also protects the base material (iron) of the pipe 100 exposed at the unused threads 120A against rusting. As the unused threads 120A are concealed within the collar 14, the joint is given a tidier appearance.

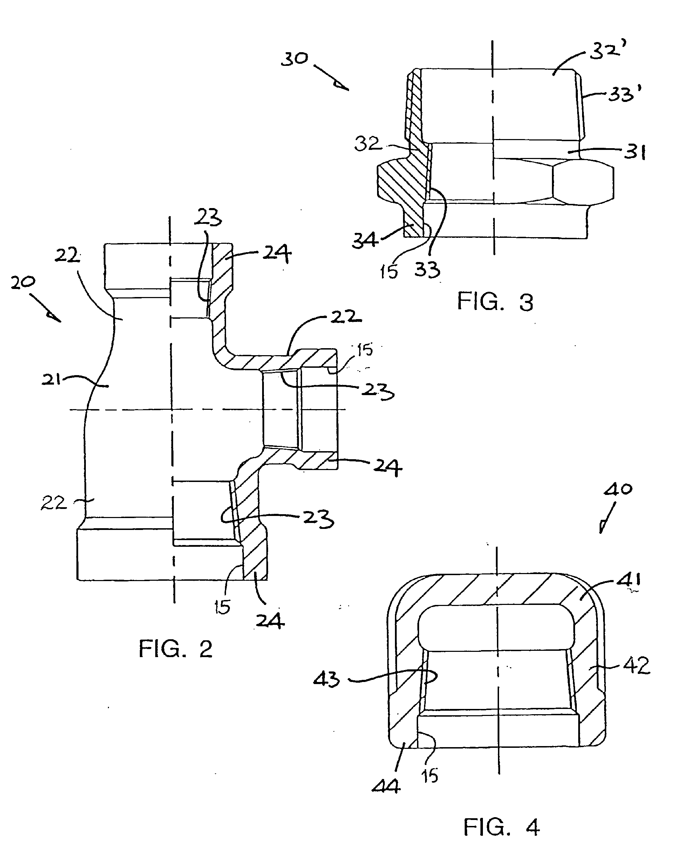

Figure 2 shows a second pipe fitting embodying the invention, which is in the form of a T-shaped joint 20 having a hollow body 21 and three open ends 22 of different diameters for connection to pipes. Each end 22 is pre-formed with internal screw threads 23 and includes an integral extension collar 24. The collars 24 have a very similar construction as the aforesaid collar 14 and are provided for the same function as described above.

Figure 3 shows a third pipe fitting embodying the invention, which is in the form of a straight joint 30 having a hollow body 31 comprising opposite open ends 32 and 32' for connection. The first end 32 is formed with internal screw threads 33 and includes an integral extension collar 34 similar to the aforesaid collar 14. The other end 32' is formed with external screw threads 33' (slightly tapered inwards) for male connection. The outside of the body 31 has a hexagonal shape to facilitate turning by a spanner.

Figure 4 shows a fourth pipe fitting embodying the invention, which is in the form of an end cap 40 having a (hollow) body 41 and a single open end 42 for closing an end of a pipe. The end 42 is formed with internal screw threads 43 and includes an integral extension collar 44 for performing the same function as the aforesaid collar 14. The body 41 has external ribs to facilitate turning.

The pipe fitting according to the present invention can protect the base material adjacent to the joints from being exposed so as to prevent the material from rusting and give a tidier appearance.

The invention has been given by way of example only, and various modifications of and/or alterations to the described embodiments may be made by persons skilled in the art without departing from the scope of the invention as specified in the appended claims.

## Claims

1. A pipe fitting comprising a hollow body (11;21;31;41) and at least one open end (12;22;32;42) for connection to a pipe, said end being preformed with internal screw threads (13;23;33;43) for connection and including an integral extension collar (14;24;34;44) which has an inner diameter larger than that of the screw threads for surrounding unused trailing screw threads of said pipe and forming an annular recess (15) to hold a sealing compound, said collar (14;24;34;44) having a wall of a comparable thickness to that of the end (12;22;32;42) behind it and an outer diameter larger than that of the end (12;22;32;42) behind it, **characterised in that** the inner diameter of the collar (14;24;34;44) is larger than the major diameter of the screw threads (13;23;33;43) of said end (12;22;32;42) along the whole of the axial length of the collar such that, in use, there is an annular gap between said pipe and said collar.

2. The pipe fitting as claimed in claim 1, in which the screw threads (13;23;33;43) of said end are slightly tapered outwards at a small angle with respect to the axis of the end.

3. The pipe fitting as claimed in claim 1 or claim 2, being made of a galvanised iron material.

4. The pipe fitting as claimed in claim 1 or claim 2, being in the form selected from the group of an elbow joint (10), a T-shaped joint (20), a straight joint (30) and an end cap (40).

5. The combination of a pipe (100) and the pipe fitting (10;20;30;40) as claimed in any preceding claim, in which there is an annular gap between the pipe (100) and the collar (14;24;34;44), the gap being completely filled with a sealing compound (X).

## Patentansprüche

1. Rohranschluss, der einen hohlen Körper (11; 21; 31; 41) und mindestens ein offenes Ende (12; 22; 32; 42) für eine Verbindung mit einem Rohr aufweist, wobei das Ende mit Innenschraubengewindegängen (13; 23; 33; 43) für eine Verbindung vorgeformt ist und eine integrierte Verlängerungshülse (14; 24; 34; 44) umfasst, die einen Innendurchmesser aufweist, der größer ist als der der Schraubengewindegänge für ein Umschließen nicht benutzter hinterer Gewindegänge des Rohres und das Bilden einer ringförmigen Aussparung (15), um eine Abdichtungsverbindung aufzunehmen, wobei die Hülse (14; 24; 34; 44) eine Wand von vergleichbarer Dicke zu der des Endes (12; 22; 32; 42) dahinter und einen Außendurchmesser größer als der des Endes (12; 22; 32; 42) dahinter aufweist, **dadurch gekennzeichnet, dass** der Innendurchmesser der Hülse (14; 24; 34; 44) größer ist als der Gewindehauptdurchmesser der Schraubengewindegänge (13; 23; 33; 43) des Endes (12; 22; 32; 42) längs der gesamten axialen Länge der Hülse, so dass bei Benutzung ein ringförmiger Spalt zwischen dem Rohr und der Hülse vorhanden ist.

2. Rohranschluss nach Anspruch 1, bei dem die Schraubengewindegänge (13; 23; 33; 43) des Endes etwas nach außen unter einem kleinen Winkel mit Bezugnahme auf die Achse des Endes zugespitzt sind.

3. Rohranschluss nach Anspruch 1 oder Anspruch 2, der aus einem verzinkten Eisenmaterial besteht.

4. Rohranschluss nach Anspruch 1 oder Anspruch 2, der in der Form vorliegt, die aus der Gruppe einer Krümmerverbindung (10), einer T-förmigen Verbindung (20), einer geradlinigen Verbindung (30) und einer Abschlusskappe (40) ausgewählt wird.

5. Kombination eines Rohres (100) und des Rohranschlusses (10; 20; 30; 40) nach einem der vorhergehenden Ansprüche, bei der ein ringförmiger Spalt zwischen dem Rohr (100) und der Hülse (14; 24; 34; 44) vorhanden ist, wobei der Spalt vollständig mit einer Abdichtungsverbindung (X) gefüllt ist.

## Revendications

1. Raccord de tuyauterie comprenant un corps creux (11; 21; 31; 41) et au moins une extrémité ouverte (12; 22; 32; 42) destinée à être connectée à un tuyau , ladite extrémité étant préformé avec des filets de vis internes s (13 ; 23 ; 33 ; 43) en vue de la connexion et englobant un collier à extension d'une seule pièce (14 ; 24 ; 34 ; 44) ayant un diamètre intérieur supérieur à celui des filets de vis pour entourer des filets de vis arrière non utilisés dudit tuyau et pour former un évidement annulaire (15) pour retenir un composé d'étanchéité, ledit collier (14 ; 24 ; 34 ; 44) comportant une paroi ayant une épaisseur comparable celle de l'extrémité située derrière (12 ; 22 ; 32 ; 42) et un diamètre extérieur supérieur à celui de l'extrémité située derrière (14 ; 24 ; 34 ; 44), **caractérisé en ce que** le diamètre intérieur du collier (14 ; 24 ; 34 ; 44) est supérieur au diamètre principal des filets de vis (13 ; 23 ; 33 ; 43) de ladite extrémité (12 ; 22 ; 32 ; 42) le long de l'ensemble de la longueur axiale du collier, de sorte qu'en service, un espace annulaire est établi entre ledit tuyau et ledit collier.

2. Raccord de tuyauterie selon la revendication 1, dans lequel les filets de vis (13 ; 23 ; 33 ; 43) de ladite extrémité sont légèrement effilés vers l'extérieur à un angle réduit par rapport à l'axe de l'extrémité.

3. Raccord de tuyauterie selon les revendications 1 ou 2, fabriqué d'un matériau de fer galvanisé.

4. Raccord de tuyauterie selon les revendications 1 ou 2, ayant une forme sélectionnée dans le groupe constitué par un joint en coude (10), un joint en T (20), un joint droit (30) et un capuchon d'extrémité.

5. Combinaison d'un tuyau (100) et du raccord de tuyauterie (10 ; 20 ; 30 ; 40) selon l'une quelconque des revendications précédentes, dans laquelle un espace annulaire est établi entre le tuyau (100) et le collier (14 ; 24 ; 34 ; 44), l'espace étant complètement rempli d'un composé d'étanchéité (X).
